# EUROPÄISCHE PATENTSCHRIFT

(11) **EP 3 274 235 B1**
(45) Veröffentlichungstag und Bekanntmachung des Hinweises auf die Patenterteilung: **27.10.2021**
(21) Anmeldenummer: 16702071.8
(22) Anmeldetag: 27.01.2016
(51) Int. Cl.: B60W 60/00, B60W 50/14, G05D 1/00

(54) **VERFAHREN ZUM MINDESTENS TEILAUTOMATISIERTEN FAHREN IN EINEM FAHRZEUG**
METHOD FOR THE LEAST PARTIALLY AUTOMATED DRIVING IN A VEHICLE
PROCÉDÉ DE CONDUITE AU MOINS SEMI-AUTOMATISÉE DANS UN VÉHICULE

(30) Priorität: 27.03.2015 DE 102015205580
(43) Veröffentlichungstag der Anmeldung: 31.01.2018
(73) Patentinhaber: Robert Bosch GmbH, 70442 Stuttgart (DE)
(72) Erfinder: BOOS, Ronald, 71332 Waiblingen (DE)
(86) Internationale Anmeldenummer: PCT/EP2016/051664
(87) Internationale Veröffentlichungsnummer: WO 2016/155905

(56) Entgegenhaltungen:
- EP-A1- 2 314 489
- EP-A1- 2 848 488
- EP-A2- 0 913 802
- DE-A1-102008 056 343
- DE-A1-102012 112 802
- DE-A1-102012 201 513

## Beschreibung

Die Erfindung bezieht sich auf ein Verfahren zum mindestens teilautomatisierten Fahren in einem Fahrzeug nach dem Oberbegriff des Anspruches 1.

### Stand der Technik

Bekannt sind Fahrerassistenzsysteme, die durch selbständigen Eingriff in Fahrzeugparameter die Fahrsicherheit erhöhen, wie beispielsweise selbständig geregelte Bremseingriffe im Rahmen eines Antiblockiersystems oder eines elektronischen Stabilitätsprogramms. Des Weiteren sind Fahrerassistenzsysteme bekannt, die bei der Fahraufgabe assistieren oder sogar teilautomatisiert durchführen, indem ein Eingriff in die Quer- und/oder Längsführung durchgeführt wird, beispielsweise beim Spurhalteassistenten (Einhaltung der Spur) oder Parkassistenten (automatisches Lenken in Parklücken).

Die EP 2 848 488 A1 offenbart ein Verfahren zur Fahrerübergabe der Fahrzeugkontrolle aus einem autonomen Fahrbetrieb, wobei eine Warninformationszeitplanung anhand der Bereitschaft des Fahrers zur Übernahme der Fahrzeugkontrolle angepasst wird.

In der US 2014/0244096 A1 wird ein System zum autonomen Fahren in einem Fahrzeug beschrieben, bei dem der aktuelle Fahrerzustand anhand von Fahreraktivitäten bestimmt und hieraus ein Fahrerrisikoindex ermittelt wird, der in einer Fahrkontrolleinheit zur Ansteuerung verschiedener Fahrzustände herangezogen wird. In der Fahrkontrolleinheit kann in Abhängigkeit des Fahrerrisikoindex das Fahrzeug teilautonom oder vollständig autonom geführt werden. Um beispielsweise von einem vollautonomen Fahrzustand zu einem teilautonomen Fahrzustand zurückzukehren, wird der Fahrer von dem System über ein Signal zur Übernahme der Fahrzeugsteuerung aufgefordert.

### Offenbarung der Erfindung

Der Erfindung liegt die Aufgabe zugrunde, mit einfachen Maßnahmen einen sicheren Übergang von einem mindestens teilautomatisierten Fahren zu einem manuellen Fahren oder einem Fahren mit geringerem Automatisierungsgrad in einem Fahrzeug zu gewährleisten.

Diese Aufgabe wird erfindungsgemäß mit den Merkmalen des Anspruches 1 gelöst. Die Unteransprüche geben zweckmäßige Weiterbildungen an.

Das erfindungsgemäße Verfahren bezieht sich auf ein Fahrzeug, insbesondere ein Kraftfahrzeug, das mit einem Fahrsystem ausgestattet ist, welches ein mindestens teilautomatisiertes, gegebenenfalls hochautomatisiertes oder vollautomatisertes Fahren des Fahrzeuges ermöglicht. Bei einem teilautomatisierten Fahren wird nur eine Teilfunktion von dem Fahrsystem übernommen, beispielsweise die Längsdynamik mit selbsttätigen Brems- und Beschleunigungseingriffen, wohingegen die weiteren Fahrfunktionen von dem Fahrer übernommen werden, beispielsweise die Querdynamik über manuelle Eingriffe im Lenksystem. Bei vollautomatisiertem Fahren werden dagegen sämtliche Eingriffe in die Längs- und Querdynamik des Fahrzeuges selbsttätig an dem Fahrsystem durchgeführt, es sind keine manuellen Eingriffe von dem Fahrer erforderlich. Bei einem hochautomatisierten Fahren, das einen geringeren Automatisierungsgrad als das vollautomatisierte Fahren besitzt, werden die Quer- und/oder Längsführung für einen bestimmten Zeitraum und in spezifischen Situationen selbsttätig durchgeführt.

Das Verfahren betrifft sowohl einen Übergang von einem vollautomatisierten Fahren zu einem hoch- bzw. teilautomatisierten, assistierten oder manuellen Fahren als auch einen Übergang von einem teilautomatisierten Fahren zu einem teilautomatisierten Fahren mit geringerem Automatisierungsgrad oder zu einem vollständig manuellen Fahren, bei dem das Fahrzeug ohne Aktivwerden des Fahrsystems und allein vom Fahrer geführt wird. In jedem Fall muss der Fahrer nach Vollzug des Übergangs ein höheres Maß an Fahreraktivität zum Führen des Fahrzeuges aufbringen als vor dem Übergang.

Zwischen der Beendigung der autonomen Fahrfunktion und der Übergabe der Fahrzeugkontrolle vom Fahrsystem an den Fahrer verstreicht beim erfindungsgemäßen Verfahren eine Übernahmezeitspanne. Erst nach Ablauf der Übernahmezeitspanne - seit einer Aufforderung seitens des Fahrsystems an den Fahrer, die manuelle Führung des Fahrzeugs zu übernehmen - wird die entsprechende Funktion vom Fahrsystem an den Fahrer übergeben. Die Übernahmezeitspanne ist fahrerindividuell und wird aus der Betätigung eines mit dem Fahrzeug kommunizierenden Geräts ermittelt.

Diese Ausführung hat den Vorteil, dass die Übernahmezeitspanne als eine individuelle Zeitgröße anhand der aktuellen Fahreraktivität im Fahrzeug bestimmt werden kann. Es kann beispielsweise von einem Standardwert der Übernahmezeitspanne ausgegangen werden, der während des automatisieren Fahrens auf der Grundlage der Fahreraktivität individuell angepasst wird. Die Fahreraktivität bezieht sich hierbei auf die Betätigung des mit dem Fahrzeug kommunizierenden Geräts durch den Fahrer. Je nach Art und Umfang der Betätigung des Gerätes ist der Fahrer mehr oder weniger abgelenkt, was sich in einer entsprechend längeren oder verkürzten Übernahmezeitspanne niederschlägt. Es kann sowohl das Ausmaß der Betätigung als auch die Art der Betätigung in Betracht gezogen werden, um die Übernahmezeitspanne festzulegen. Es kann sowohl die Art des mit dem Fahrzeug kommunizierenden Gerätes als auch die Art der Nutzung des Gerätes berücksichtigt werden.

Bei dem Gerät handelt es sich vorzugsweise um ein mobiles Gerät, das optional mit dem Fahrzeug verbunden werden kann, um eine Kommunikation zwischen dem Gerät und dem Fahrzeug bzw. einem Regel- bzw. Steuergerät im Fahrzeug herzustellen. Die Verbindung kann mittels Kabel oder kabellos erfolgen, beispielsweise über Bluetooth. Alternativ zu einem mobilen Gerät ist dieses fest in das Fahrzeug integriert, beispielsweise in Form eines Navigationssystems, das von dem Fahrer bedient wird.

Bei dem mobilen Gerät handelt es sich beispielsweise um ein Smartphone, ein Tablet, ein Mobiltelefon, ein Notebook, eine Smartwatch oder um sonstige wearable devices wie zum Beispiel eine Datenbrille. Es muss zumindest eine Datenübertragung von dem mobilen Gerät zu dem Fahrzeug möglich sein, damit die Fahreraktivität an dem Gerät auf das Fahrzeug übermittelt werden kann. Gemäß einer vorteilhaften Ausführung besteht auch eine Kommunikationsverbindung von dem Fahrzeug zu dem Gerät, so dass auch Daten vom Fahrzeug auf das Gerät übertragen werden können.

Es ist möglich, lediglich Sensordaten von dem Gerät an das Fahrzeug zu übertragen, beispielsweise eine Tastenbetätigung an dem Gerät, und in dem Fahrzeug bzw. einem dort verbauten Regel- bzw. Steuergerät die Auswertung der Sensordaten zu übernehmen. In einer alternativen Ausführung erfolgt dagegen bereits in dem Gerät die Auswertung der Sensordaten, wobei lediglich die ausgewertete Information von dem Gerät an das Fahrzeug bzw. das Regel- bzw. Steuergerät übertragen wird. Aus den ausgewerteten Sensordaten ergibt sich die Übernahmezeitspanne.

Gemäß einer vorteilhaften Ausführung wird die fahrerindividuelle Übernahmezeitspanne mit einer Mindestbetriebszeitspanne, die im Fahrsystem fortlaufend ermittelt wird, verglichen. Die Mindestbetriebszeitspanne stellt diejenige Zeitspanne dar, während der das Fahrzeug, gesteuert vom Fahrsystem, vom aktuellen Zeitpunkt ausgehend noch automatisiert fahren kann. Die Mindestbetriebszeitspanne wird fortlaufend aktualisiert, sie kann sich fortlaufend ändern und Werte zwischen 0 und **∞** einnehmen. Beispielsweise bei konstanten Umfeldbedingungen zum Beispiel während einer Autobahnfahrt kann die Mindestbetriebszeitspanne den Wert **∞** einnehmen, solange kein unvorhergesehenes Ereignis eintritt. Tritt dagegen eine die Fahrsituation änderndes Ereignis ein, beispielsweise ein plötzliches Einscheren eines Drittfahrzeugs unmittelbar vor dem automatisiert oder teilautomatisiert fahrenden Fahrzeug, so kann die Mindestbetriebszeitspanne auf einen kleinen Wert gesetzt werden, gegebenenfalls auf 0, ebenso bei Notfallsituationen wie zum Beispiel einem Unfall.

Im Regelfall soll die Mindestbetriebszeitspanne größer sein als die fahrerindividuelle Übernahmezeitspanne, um dem Fahrer eine ausreichende Zeit für die Übernahme der Fahrfunktion zu geben. Ist dies dagegen nicht möglich, beispielsweise bei dem Eintreten eines unvorhergesehenen Ereignisses, so dass die Mindestbetriebszeitspanne kürzer ist als die aktuelle, fahrerindividuelle Übernahmezeitspanne, so wird vorteilhafterweise ein Warnsignal erzeugt. Dieses wird, gemäß bevorzugter Ausführung, dem Fahrer zur Anzeige gebracht, beispielsweise auf optische, akustische und/oder haptische Weise. Mit dem Warnsignal kann eine Aufforderung zur sofortigen Übernahme der Fahrfunktion durch den Fahrer verbunden sein.

Gemäß einer weiteren zweckmäßigen Ausführung dient das Warnsignal zur selbsttätigen Beeinflussung eines Systems bzw. Aggregats im Fahrzeug, bei dem es sich gegebenenfalls auch um das Gerät handeln kann, welches von dem Fahrer betätigt wird oder betätigt werden kann. Es kann zum Beispiel zweckmäßig sein, den Umfang der zugelassenen Betätigung des Gerätes einzuschränken, beispielsweise auf weniger konzentrationsintensive Tätigkeiten, um den Fahrer weniger von dem Fahrgeschehen abzulenken. Zusätzlich oder alternativ ist auch ein Eingriff in das Fahrsystem zum automatisieren Fahren oder in ein sonstiges System bzw. Aggregat im Fahrzeug möglich, um Parameter zu modifizieren, beispielsweise um eine Vorbefüllung mit hydraulischem Bremsfluid im Bremssystem durchzuführen.

Gemäß einer weiteren zweckmäßigen Ausführung wird die Mindestbetriebszeitspanne auf der Grundlage von sensorisch ermittelten Fahrzeugzustandsgrößen und/oder Umfeldinformationen berechnet. Das Fahrzeug weist eine Sensorik auf, mit der die entsprechenden Größen bzw. Informationen detektiert werden können bzw. aus denen die Größen bzw. Informationen berechnet werden können.

Des Weiteren kann es zweckmäßig sein, dass für die Ermittlung der fahrerindividuellen Übernahmezeitspanne unterschiedliche Betätigungen des Geräts durch den Fahrer mit unterschiedlichen Betätigungsgewichtungsfaktoren belegt werden. Hiermit ist es möglich, beispielsweise zwischen konzentrationsintensiven und weniger konzentrationsintensiven Betätigungen zu unterscheiden, wobei eine Betätigung, welche eine höhere Konzentration erfordert, auch zu einer Verlängerung der Übernahmezeitspanne führt.

In die Ermittlung der Übernahmezeitspanne können außerdem weitere Betätigungen des Fahrers und Verhaltensweisen einfließen. Zum Beispiel ist es möglich, Informationen einer Innenraumkamera, welche den Fahrer überwacht, zu nutzen, oder Sensorinformationen heranzuziehen, aus denen auf den aktuellen Zustand des Fahrers geschlossen werden kann, beispielsweise die Betätigung von Bedienelementen wie zum Beispiel Fahrpedalen.

Gemäß einer weiteren zweckmäßigen Ausführung wird aus den Betätigungen des Gerätes, welche der Ermittlung der Übernahmezeitspanne zugrunde liegen, mindestens ein Fahrgewichtungsfaktor ermittelt, mit dem der Fahrertyp gekennzeichnet wird. Der Fahrgewichtungsfaktor ermöglicht es beispielsweise, verschiedene Fahrertypen zu unterscheiden, beispielsweise sportliche Fahrer und sicherheitsorientierte Fahrer. Der Fahrgewichtungsfaktor wird insbesondere über einen längeren Zeitraum ermittelt und stellt somit einen Mittelwert dar, der sich jedoch auch gegebenenfalls während einer Fahrt ändern kann, beispielsweise bei einem Nachlassen der Aufmerksamkeit des Fahrers.

Gemäß einer weiteren zweckmäßigen Ausführung werden ein oder mehrere Betätigungsgewichtungsfaktoren und/oder Fahrgewichtungsfaktoren auf dem Gerät abgespeichert und können gegebenenfalls bei einer künftigen automatisieren Fahrt weiterverwendet werden. Die Gewichtungsfaktoren verbessern auf diese Weise den Startwert bei der künftigen automatisierten Fahrt, so dass bereits zu Beginn der künftigen automatisierten Fahrt eine verbesserte fahrerindividuelle Übernahmezeitspanne zur Verfügung steht.

Zusätzlich oder alternativ zu dem Gewichtungsfaktor kann es auch zweckmäßig sein, eine sonstige fahrerindividuelle Kenngröße auf dem Gerät abzuspeichern und bei einer künftigen automatisierten Fahrt weiterzuverwenden, beispielsweise den letzten Wert der Übernahmezeitspanne.

Das erfindungsgemäße Verfahren läuft in einem Regel- bzw. Steuergerät ab, das in das Fahrzeug integriert und insbesondere Bestandteil des Fahrsystems ist, mit dem das autonome Fahren in dem Fahrzeug gesteuert wird. Es kann jedoch zweckmäßig sein, wie vorbeschrieben einen Teil der Auswertung auf dem Gerät, insbesondere dem mobilen Gerät durchzuführen und die ausgewerteten Informationen über die Kommunikationsschnittstelle auf das Regel- bzw. Steuergerät zu übertragen.

Bei dem Fahrsystem, zu dem das Regel- bzw. Steuergerät gehört, handelt es sich um ein System zur Beeinflussung der Längs- und/oder Querdynamik im Fahrzeug, beispielsweise um ein Bremssystem, insbesondere mit integrierter Antiblockiersystemfunktion und/oder elektronischem Stabilitätsprogramm, einer Antriebsschlupfregelung, einem Lenksystem mit elektrischem Servomotor oder dergleichen.

Sowohl das Gerät, insbesondere das mobile Gerät als auch das Fahrzeug sind jeweils mit einer Kommunikationseinheit ausgestattet, über die eine Datenübertragung zumindest von dem Gerät zum Fahrzeug, vorzugsweise auch in Gegenrichtung möglich ist. Die Kommunikationseinheiten stellen eine Kommunikationsschnittstelle für den Datenaustausch dar. Im Falle eines mobilen Gerätes kann die Kommunikation drahtlos, beispielsweise über Bluetooth, oder per Kabel erfolgen.

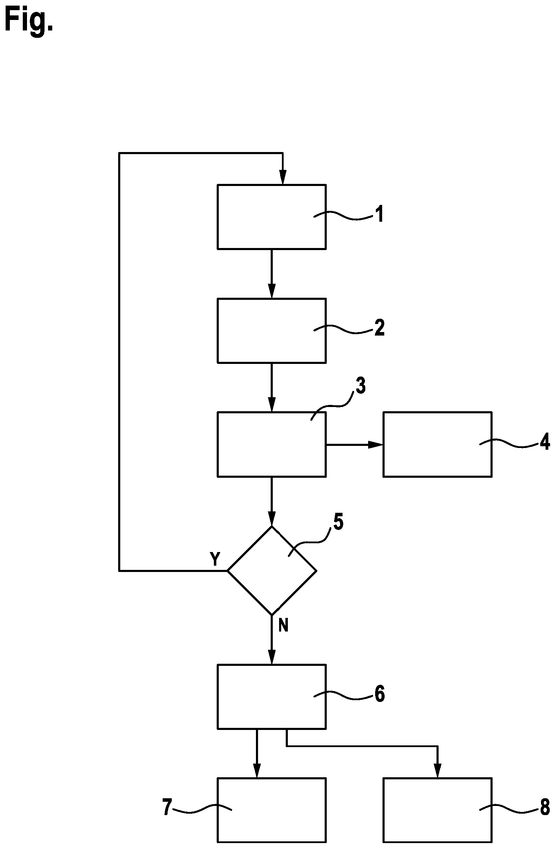

Weitere Vorteile und zweckmäßige Ausführungen sind den weiteren Ansprüchen, der Figurenbeschreibung und der Zeichnung zu entnehmen, in der ein Ablaufdiagramm zur Durchführung des Verfahrens dargestellt ist.

Die Durchführung des Verfahrens setzt ein Fahrzeug mit einem Fahrsystem voraus, mit dem das Fahrzeug zumindest teilweise, gegebenenfalls vollständig automatisiert gesteuert werden kann. Das Fahrsystem umfasst ein Regel- bzw. Steuergerät, in dem auf der Basis empfangener Sensorinformationen Stellsignale generiert werden zur Ansteuerung von Aggregaten im Fahrzeug, welche die Längs- und/oder Querdynamik beeinflussen, beispielsweise das Bremssystem, den Antriebsmotor und/oder das Lenksystem. Im Fahrzeug ist eine Sensorik verbaut, über die aktuelle Fahrzustandsgrößen ermittelt werden, beispielsweise Raddrehzahlsensoren oder Beschleunigungssensoren, sowie Umfeldinformationen, beispielsweise Radareinrichtungen oder Kameras.

Das in dem Ablaufdiagramm beschriebene Verfahren geht im Schritt 1 von einer Aktivierung des Fahrsystems zum automatisierten Fahren in einem Fahrzeug aus. Die Aktivierung erfolgt insbesondere durch manuelles Einschalten durch den Fahrer und betrifft ein teilweises oder vollständig automatisiertes Fahren, indem das Fahrsystem entsprechend die Steuerung des Fahrzeuges zur selbsttätigen Einstellung der Längs- und/oder Querdynamik übernimmt.

Im nächsten Verfahrensschritt 2 wird während des automatisierten Fahrens eine Mindestbetriebszeitspanne tᵥ ermittelt, während der, ausgehend vom aktuellen Zeitpunkt, das Fahrzeug mindestens noch automatisiert zu fahren in der Lage ist. Die Mindestbetriebszeitspanne tᵥ wird fortlaufend neu ermittelt. Die Mindestbetriebszeitspanne tᵥ hängt in erster Linie von Umfeldbedingungen ab, beispielsweise von den Drittfahrzeugen in der Umgebung des automatisiert fahrenden Fahrzeuges oder von Witterungsbedingungen. So kann zum Beispiel bei konstanter Autobahnfahrt ohne Überholvorgang die Mindestbetriebszeitspanne tᵥ, während der mindestens noch ein automatisiertes Fahren möglich ist, gegen **∞** gehen, wohingegen in Notfallsituationen, zum Beispiel bei einem erkannten Unfall, die Mindestbetriebszeitspanne tᵥ gegen 0 geht bzw. den Wert 0 einnehmen kann; in letztgenanntem Fall kann ein sofortiger Übergang der Fahrfunktion von dem automatisierten Fahrsystem auf den Fahrer erforderlich sein. Der Übergang kann graduell erfolgen, so dass beispielsweise im Falle eines vollautomatisierten Fahrens eine Reduzierung auf teilautomatisiertes Fahren durchgeführt wird, indem zum Beispiel die Lenkfunktion vom automatisierten Fahrsystem auf den Fahrer übergeht, jedoch Brems- und Beschleunigungsfunktionen weiterhin vom automatisierten Fahrsystem übernommen werden. Es ist auch möglich, unmittelbar vom vollautomatisierten Fahrzustand vollständig auf manuelles Fahren überzugehen oder von einem hoch- bzw. teilautomatisierten Fahrzustand auf manuelles Fahren.

Die Übergabe von automatisiertem Fahren auf manuelles Fahren erfolgt nach Aufforderung durch das Fahrsystem. Im Regelfall findet der Übergang nach dem Verstreichen einer fahrerindividuellen Übernahmezeitspanne t_{D} statt, während der das Fahrzeug noch automatisiert geführt wird und die dem Fahrer die Möglichkeit gibt, seine Aufmerksamkeit auf das manuelle Führen des Fahrzeuges zu richten.

Im nächsten Verfahrensschritt 3 wird die fahrerindividuelle Übernahmezeitspanne t_{D} ermittelt, welche den Zeitraum kennzeichnet, den der Fahrer zur Übernahme der Steuerungsfunktion im Fahrzeug benötigt. Es handelt sich bei der

Übernahmezeitspanne um eine fahrerindividuelle und situationsabhängige Größe, die vom Fahrertyp, aber auch von der aktuellen Verfassung sowie der aktuellen Tätigkeit des Fahrers während des automatisierten Fahrens abhängt. Für die Ermittlung der Übernahmezeitspanne wird die Betätigung eines mit dem Fahrzeug kommunizierenden Geräts durch den Fahrer herangezogen. Bei diesem Gerät handelt es sich bevorzugt um ein mobiles Gerät wie beispielsweise ein Smartphone, ein Tablet, ein Notebook oder ein sogenanntes wearable device wie beispielsweise eine Smartwatch. Das mobile Gerät steht mit dem Fahrzeug in Verbindung und kommuniziert mit ihm, beispielsweise kabellos über Bluetooth oder über ein Verbindungskabel. Aus der Betätigung des Gerätes durch den Fahrer kann ein Rückschluss auf den aktuellen Aufmerksamkeitszustand des Fahrers gezogen werden, was zur Ermittlung der Übernahmezeitspanne herangezogen wird.

Alternativ zu einem mobilen Gerät kann auch die Betätigung eines fest installierten Gerätes im Fahrzeug für die Ermittlung der fahrerindividuellen Übernahmezeitspanne herangezogen werden, beispielsweise ein in das Fahrzeug integriertes Navigationssystem.

Das Gerät kommuniziert mit dem Fahrzeug, wobei zumindest eine Datenübertragung von dem Gerät auf das Fahrzeug möglich ist, vorzugsweise aber auch eine Datenübertragung in Gegenrichtung.

Die unterschiedlichen Betätigungen des Geräts durch den Fahrer können mit verschiedenen Betätigungsgewichtungsfaktoren belegt werden. Hierbei wird der Tatsache Rechnung getragen, dass unterschiedliche Nutzungsarten mit einem unterschiedlich hohen Konzentrationszustand einhergehen. Beispielsweise ist das Lesen von Nachrichten mit einem geringeren Aufmerksamkeitszustand verbunden als das Eingeben einer Nachricht oder das Erfassen vertraulicher Informationen wie beispielsweise Auszüge von Bankkonten. Dementsprechend können derartige Tätigkeiten mit unterschiedlich hohen Betätigungsgewichtungsfaktoren belegt werden, wobei eine Tätigkeit, die einen höheren Aufmerksamkeitszustand erfordert, mit einem größeren Betätigungsgewichtungsfaktor multipliziert wird als eine Tätigkeit mit einem geringeren Aufmerksamkeitszustand. Die Betätigungsgewichtungsfaktoren können zusätzlich zu dem bereits vorgenannten Aufmerksamkeitszustand, welcher für eine bestimmte Tätigkeit erforderlich ist, auch eine motorisch Anforderung betreffen, da beispielsweise das Eintippen einer Nachricht eine komplexere motorische Betätigung darstellt als das Beiseitelegen des mobilen Geräts.

Den verschiedenen Tätigkeiten können zudem Einzelzeitschätzungen zugeordnet werden, die zu einer Gesamtzeit addiert werden, welche wiederum mit den verschiedenen Betätigungsgewichtsfaktoren multipliziert wird. Die Einzelzeitschätzungen umfassen beispielsweise das Lesen von Internetnachrichten, das Lesen von E-Mails, motorische Tätigkeiten wie das Beiseitelegen des mobilen Gerätes, das Telefonieren etc.

Aus den vorgenannten Informationen wird die Übernahmezeitspanne ermittelt. Die Betätigungsgewichtungsfaktoren können in dem Schritt 4 auf dem Gerät abgespeichert und bei der nächsten automatisierten Fahrt als Startwerte verwendet werden, wodurch verbesserte Anfangsbedingungen für die Ermittlung der Übernahmezeitspanne gegeben sind. Auch die Übernahmezeitspanne, welche im Zeitpunkt des Übergangs vom automatisierten zum fahrerindividuellen Fahren vorliegt, kann gegebenenfalls auf dem Gerät abgespeichert werden.

Im folgenden Verfahrensschritt 5 wird abgefragt, ob die Mindestbetriebszeitspanne tᵥ des automatisierten Fahrsystems größer ist als die fahrerindividuelle Übernahmezeitspanne t_{D}. Sofern dies der Fall ist, kann gefahrlos jederzeit von dem automatisierten Fahrzustand zum manuellen Fahren übergegangen werden. Es ist somit auch möglich, das automatisierte Fahren mithilfe des Fahrsystems fortzuführen. In diesem Fall wird der Ja-Verzweigung ("Y") folgend wieder zum ersten Verfahrensschritt 1 zurückgekehrt und das gesamte Verfahren in zyklischen Abständen erneut durchlaufen.

Ergibt dagegen die Abfrage im Schritt 5, dass die Mindestbetriebszeitspanne tᵥ des automatisierten Fahrsystems nicht größer ist als die fahrerindividuelle Übernahmezeitspanne t_{D}, so ist keine ausreichende Zeitreserve für einen regulären Übergang mit ausreichender Fahrsicherheit von dem automatisierten System zum individuellen Fahren gegeben. In diesem Fall wird der Nein-Verzweigung ("N") folgend zum nächsten Verfahrensschritt 6 fortgefahren, in welchem ein Warnsignal erzeugt wird. Das Warnsignal kann zum einen gemäß Schritt 7 dem Fahrer auf akustische, optische und/oder haptische Weise zur Anzeige gebracht werden, zum andern kann das Warnsignal im Verfahrensschritt 8 auch zu einer Zustandsänderung eines Systems im Fahrzeug führen. Hierbei wird zum Beispiel der zulässige Funktionsumfang des Gerätes, welches von dem Fahrer betätigt wird, eingeschränkt, insbesondere auf weniger ablenkende und weniger konzentrationsintensive Tätigkeiten. Beispielsweise kann das Eintippen von Informationen gesperrt werden, jedoch das Lesen von Informationen erlaubt bleiben.

Darüber hinaus ist es gemäß Schritt 8 aber auch möglich, dass das Warnsignal zu einer Umparametrierung in einem Fahrzeugsystem führt, beispielsweise im Bremssystem, indem zum Beispiel eine Vorbefüllung mit hydraulischem Bremsfluid durchgeführt wird.

## Patentansprüche

1. Verfahren zum mindestens teilautomatisierten Fahren in einem Fahrzeug, bei dem ein Fahrsystem eine oder mehrere Fahrfunktionen automatisiert durchführt, wobei die Beendigung der automatisierten Fahrfunktion und die mindestens teilweise Übergabe der Fahrzeugkontrolle vom Fahrsystem an den Fahrer nach Aufforderung durch das Fahrsystem erst nach dem Verstreichen einer Übernahmezeitspanne (t_{D}) erfolgt, **dadurch gekennzeichnet, dass** die Übernahmezeitspanne aus der Betätigung eines mit dem Fahrzeug kommunizierenden Geräts durch den Fahrer ermittelt wird.

2. Verfahren nach Anspruch 1, **dadurch gekennzeichnet, dass** das Gerät ein mobiles Gerät ist, das optional zur Herstellung der Kommunikation mit dem Fahrzeug verbunden werden kann.

3. Verfahren nach Anspruch 1 oder 2, **dadurch gekennzeichnet, dass** für den Fall, dass eine Mindestbetriebszeitspanne (tᵥ), in der das Fahrzeug noch teil-, hoch- oder vollautomatisiert fährt, kürzer ist als die Übernahmezeitspanne (t_{D}), ein Warnsignal erzeugt wird.

4. Verfahren nach Anspruch 3, **dadurch gekennzeichnet, dass** das Warnsignal dem Fahrer zur Anzeige gebracht wird und/oder das Warnsignal zu einer Einschränkung der zugelassenen Betätigung des Geräts führt.

5. Verfahren nach Anspruch 3 oder 4, **dadurch gekennzeichnet, dass** für den Fall, dass die Mindestbetriebszeitspanne (tᵥ) auf der Grundlage von sensorisch ermittelten Fahrzeugzustandsgrößen und/oder Umfeldinformationen berechnet wird.

6. Verfahren nach einem der Ansprüche 1 bis 5, **dadurch gekennzeichnet, dass** zur Ermittlung der Übernahmezeitspanne (t_{D}) unterschiedliche Betätigungen des Geräts durch den Fahrer mit verschiedenen Betätigungsgewichtungsfaktoren belegt werden.

7. Verfahren nach Anspruch 6, **dadurch gekennzeichnet, dass** die Betätigungsgewichtungsfaktoren auf dem Gerät abgespeichert und bei einer künftigen teil-, hoch- oder vollautomatisierten Fahrt weiterverwendet werden.

8. Regel- bzw. Steuergerät umfassend Mittel zur Durchführung des Verfahrens nach einem der Ansprüche 1 bis 7.

9. Fahrsystem für ein Fahrzeug zum teil-, hoch- oder vollautomatisierten Fahren mit einem Regel- bzw. Steuergerät nach Anspruch 8.

10. Fahrzeug mit einem Fahrsystem nach Anspruch 9.

11. Fahrzeug nach Anspruch 10, mit einer Kommunikationsschnittstelle zum Anschließen eines mobilen Geräts.

12. Fahrzeug nach Anspruch 11, **dadurch gekennzeichnet, dass** das mobile Gerät ein Smartphone, ein Mobiltelefon, ein Tablet oder dergleichen ist.

## Claims

1. Method for at least partially automated driving in a vehicle, in which a driving system performs one or more driving functions in an automated manner, wherein the ending of the automated driving function and the at least partial handover of vehicle control from the driving system to the driver takes place following a request by the driving system only after a takeover time interval (t_{D}) has elapsed, **characterized in that** the takeover time interval is determined from the actuation of a device communicating with the vehicle by the driver.

2. Method according to Claim 1, **characterized in that** the device is a mobile device that may optionally be connected to the vehicle in order to establish the communication.

3. Method according to Claim 1 or 2, **characterized in that** a warning signal is generated in the event that a minimum operating time interval (tᵥ) in which the vehicle is still driving in a partially, highly or fully automated manner is shorter than the takeover time interval (T_{D}).

4. Method according to Claim 3, **characterized in that** the warning signal is displayed to the driver and/or the warning signal leads to a restriction of the permitted actuation of the device.

5. Method according to Claim 3 or 4, **characterized in that**, in the event that the minimum operating time interval (tᵥ) is calculated on the basis of vehicle state variables and/or surroundings information determined by way of sensors.

6. Method according to one of Claims 1 to 5, **characterized in that**, in order to determine the takeover time interval (t_{D}), different actuations of the device by the driver are given different actuation weighting factors.

7. Method according to Claim 6, **characterized in that** the actuation weighting factors are stored on the device and are reused during future partially, highly or fully automated driving.

8. Regulation or control device comprising means for performing the method according to one of Claims 1 to 7.

9. Driving system for a vehicle for partially, highly or fully automated driving using a regulation or control device according to Claim 8.

10. Vehicle having a driving system according to Claim 9.

11. Vehicle according to Claim 10, having a communication interface for the connection of a mobile device.

12. Vehicle according to Claim 11, **characterized in that** the mobile device is a smartphone, a mobile telephone, a tablet or the like.

## Revendications

1. Procédé de conduite au moins partiellement automatisée dans un véhicule, dans lequel un système de conduite exécute de manière automatisée une ou plusieurs fonctions de conduite,
dans lequel l'arrêt de la fonction de conduite automatisée et le transfert au moins partiel du contrôle sur le véhicule du système de conduite au conducteur, suite à une demande de la part du système de conduite à l'intention du conducteur, n'ont lieu qu'après écoulement d'un laps de temps de reprise en main (t_{D}),
**caractérisé en ce que** le laps de temps de reprise en main est déterminé à partir de l'actionnement par le conducteur d'un appareil en communication avec le véhicule.

2. Procédé selon la revendication 1, **caractérisé en ce que** l'appareil est un appareil mobile qui peut en option être relié au véhicule pour établir la communication.

3. Procédé selon la revendication 1 ou 2, **caractérisé en ce qu'**un signal d'alarme est produit au cas où un laps de temps de fonctionnement minimal (tᵥ) pendant lequel le véhicule se déplace encore de manière partiellement, hautement ou entièrement automatisée, est plus court que le laps de temps de reprise en main (t_{D}) .

4. Procédé selon la revendication 3, **caractérisé en ce que** le signal d'alarme est affiché à l'intention du conducteur et/ou le signal d'alarme entraîne une restriction de l'actionnement autorisé de l'appareil.

5. Procédé selon la revendication 3 ou 4, **caractérisé en ce que**, au cas où le laps de temps de fonctionnement minimal (tᵥ) est calculé sur la base de grandeurs d'état de véhicule déterminées par des capteurs et/ou d'informations sur l'environnement.

6. Procédé selon l'une quelconque des revendications 1 à 5, **caractérisé en ce que** pour la détermination du laps de temps de reprise en main (t_{D}), différents facteurs de pondération d'actionnement sont appliqués à différents actionnements de l'appareil par le conducteur.

7. Procédé selon la revendication 6, **caractérisé en ce que** les facteurs de pondération d'actionnement sont stockés sur l'appareil et sont réutilisés lors d'un déplacement futur partiellement, hautement ou entièrement automatisé.

8. Appareil de régulation ou de commande, comprenant des moyens pour exécuter le procédé selon l'une quelconque des revendications 1 à 7.

9. Système de conduite pour un véhicule pour la conduite partiellement, hautement ou entièrement automatisée, comprenant un appareil de régulation ou de commande selon la revendication 8.

10. Véhicule comprenant un système de conduite selon la revendication 9.

11. Véhicule selon la revendication 10, comprenant une interface de communication pour connecter un appareil mobile.

12. Véhicule selon la revendication 11, **caractérisé en ce que** l'appareil mobile est un smartphone, un téléphone mobile, une tablette ou similaires.
